# EUROPÄISCHE PATENTSCHRIFT

(11) **EP 1 751 438 B1**
(45) Veröffentlichungstag und Bekanntmachung des Hinweises auf die Patenterteilung: **02.01.2008**
(21) Anmeldenummer: 05762854.7
(22) Anmeldetag: 23.05.2005
(51) Int. Cl.: F16C 3/08

(54) **GEGOSSENE HOHLE KURBELWELLE**
CAST, HOLLOW CRANKSHAFT
ARBRE-MANIVELLE CREUX COULE

(30) Priorität: 25.05.2004 DE 102004026058
(43) Veröffentlichungstag der Anmeldung: 14.02.2007
(73) Patentinhaber: R.A.E.-GmbH, 65428 Rüsselsheim (DE)
(72) Erfinder: HENKEL, Horst, 35232 Dautphetal-Friedensdorf (DE)
(74) Vertreter: Wolf, Michael
(86) Internationale Anmeldenummer: PCT/DE2005/000952
(87) Internationale Veröffentlichungsnummer: WO 2005/116464

(56) Entgegenhaltungen:
- WO-A-03/016729
- WO-A-20/04048790
- DE-C- 678 539

## Beschreibung

Die Erfindung betrifft eine gegossene hohle Kurbelwelle mit Kurbelwellen-Lagerzapfen, Pleuel-Lagerzapfen, Kurbelwangen, Massenausgleichen, Ölkanälen, die jeweils vom Außenumfang eines Kurbelwellen-Lagerzapfens zum Außenumfang eines Pleuel-Lagerzapfens verlaufen und der Lagerschmierung dienen, und einem Hohlraum, der sich über einen Kurbelwellen-Lagerzapfen, eine Kurbelwange und einen Pleuel-Lagerzapfen hinweg erstreckt.

Kurbelwellen sind wesentlicher Bestandteil von Maschinen (z.B. PKW- und LKW-Fahrzeugmotoren, Schiffsmotoren, stationären Motoren usw.). Eine Kurbelwelle weist dabei Kurbelwellen-Lagerzapfen auf, die der Lagerung der Kurbelwelle in Wellenlagern dienen. Ferner umfaßt sie Pleuel-Lagerzapfen für die Lagerung von Pleuelstangen in Pleuellagern. Zur Schmierung der Pleuellager sind Ölkanäle vorgesehen, die sich jeweils vom Außenumfang eines Kurbelwellen-Lagerzapfens zum Außenumfang eines Pleuel-Lagerzapfens erstrecken, also durch den Wellenkörper verlaufen. Das den Wellenlagern in bekannter Weise über eine zentrale Ölversorgung jeweils zugeführte Schmiermittel wird bei Rotation der Kurbelwelle an das Pleuellager, mit dem das jeweilige Wellenlager über den betreffenden Ölkanal verbunden ist, weitergeleitet.

Kurbelwellen sind aufgrund der sich beim Maschinenbetrieb zeitlich und örtlich stark ändernden Kräfte, Dreh- und Biegemonente und der daraus resultierenden Schwingungen sehr starken Belastungen ausgesetzt. Daher werden solche Wellen überwiegend massiv gefertigt, und zwar werden hochbelastete Wellen als Schmiedeteile aus z.B. Stahl ausgeführt und geringer belastete Wellen aus Stahl oder Gußeisen geeigneter Wahl gegossen. Die Ölkanäle, die jeweils zwischen einem Kurbelwellen-Lagerzapfen und einem Pleuel-Lagerzapfen verlaufen, werden nachträglich in den Wellenkörper eingebracht, i.d.R. gebohrt. Alternativ ist bekannt (z.B. aus der DE 196 12 678 A1), zur Ausbildung von Ölkanälen entsprechend positionierte Metallröhrchen beim Gießen der Kurbelwelle mit einzugießen. Nachteilig bei den massiven Kurbelwellen sind das sich auf den Kraftstoffverbrauch der Motoren negativ auswirkende hohe Gewicht der Wellen und die kostenintensive Fertigung bei den geschmiedeten Wellen. Das nachträgliche Einbringen der Ölkanäle birgt darüber hinaus die Gefahr, daß Bohrrückstände in der Kurbelwelle verbleiben, was zu einer Schädigung des Motors führen kann.

Zur Gewichtsreduktion sind beispielsweise aus der DE 42 39 691 A1 und der DE 195 36 349 C1 hohl ausgeführte Kurbelwellen bekannt, die aus einzelnen Platten und Rohren bzw. aus mehreren Segmenten zusammengesetzt (verschweißt) sind. Die Ölkanäle sind in Form von eingelegten Rohren oder in Form von in die Segmente eingebrachten Öffnungen realisiert. Derartige Wellen sind aufwendig in der Herstellung sowie relativ instabil und daher nicht für höhere Belastungen geeignet.

Ferner sind weiter unten näher beschriebene, hohlgegossene Kurbelwellen bekannt, bei denen aufgrund eingelegter Gießkerne ein Hohlraum im Inneren der Kurbelwelle freigespart ist. Die Wellenkörper derart hohlgegossener Kurbelwellen weisen an der Außenkontur der Wellen daher zahlreiche Kernlöcher auf, die durch die nötige sichere Lagerung der festen Gießkerne während des Gießprozesses entstehen und nach dem Gießen dazu dienen, das Kernmaterial vollständig entfernen zu können. Solche Kurbelwellen sind in der Praxis herstellbar, aber nicht in der Praxis (in Serie) in Brennkraftmaschinen einsetzbar, da sie auf Dauer nicht den beim Maschinenbetrieb auftretenden Kräften (insbesondere Torsions- und Biegekräften) Stand halten können. Ferner kann durch die zahlreichen Kernlöcher beim Maschinenbetrieb Schmiermittel in den Kurbelwelleninnenraum gelangen, was Unwuchten zur Folge hat.

Die GB 2 143 615 A offenbart eine hohlgegossene Kurbelwelle, deren Innenraum vollkommen hohl ausgeführt ist. Um die Versorgung der Lager mit Schmiermittel zu ermöglichen, sind in den Kurbelwellen-Lagerzapfen und in den Pleuel-Lagerzapfen Öffnungen vorgesehen, die durch nachträglich eingebrachte bzw. erzeugte Schmiermittelverbindungskanäle (z.B. flexible Schläuche oder schlauchartige Hohlräume in einem nachträglich in den Kurbelwelleninnenraum eingefüllten Füllmittel) verbunden sind.

Die in der DE 1 022 426 B gezeigte hohlgegossene Kurbelwelle weist bei im wesentlichen gleichmäßiger Wandstärke mehrere, z.T. S-förmig ausgebildete Hohlräume auf, die sich durch Kurbelarme, Pleuellager und Kurbelwellenlager erstrecken. Da die Hohlräume an ihren Enden ausmünden, ist die Außenkontur der Kurbelwelle an mehreren Stellen großräumig durchbrochen, wodurch die Kurbelwelle erheblich geschwächt ist. Durch die Anordnung der Hohlräume ergeben sich unterschiedliche, zusammenhängende Materialstränge. Zusammenhängende Materialstränge und Kurbelarme mit ovalem Querschnitt dienen der Stabilitätserhöhung der Kurbelwelle. Zur Schmiermittelversorgung der Pleuellager sind vorgeformte, entsprechend positionierte Rohre beim Gießen der Kurbelwelle mit eingegossen worden, die jeweils freiliegend durch die Hohlräume verlaufen.

Die GB 481 928 zeigt eine hohlgegossene Kurbelwelle ohne Ölkanäle. Durch eingegossene Versteifungstrennwände ist der Innenraum der Kurbelwelle in zahlreiche zellenähnliche Hohlräume untergliedert. Dabei sind die Trennwände in den Übergangsbereichen von Pleuel-Lagerzapfen bzw. Kurbelwellen-Lagerzapfen zu den jeweils angrenzenden Kurbelwangen quer zur Längsachse der Kurbelwelle angeordnet, d.h. die Kurbelwellen-Lagerzapfen und die Pleuel-Lagerzapfen sind vollkommen hohl ausgebildet. Weitere Trennwände sind in den Kurbelwangen selbst vorgesehen. Zur Stabilitätserhöhung werden bogenförmige Übergänge der Trennwände in die angrenzenden Wände und lokale interne Härtung vorgeschlagen.

In der DE 678 539 C wird eine hohlgegossene Kurbelwelle ohne Ölkanäle beschrieben. Zur Verbesserung der Stabilität wird vorgeschlagen, daß die Kurbelwelle entsprechend den verschieden großen äußeren Krafteinwirkungen verschieden große Wandstärken bzw. exzentrische Hohlräume aufweist. Zusätzlich können zur Versteifung eine oder mehrere längs und/oder senkrecht zur Kurbelwellenlängsachse verlaufende Rippen vorhanden sein.

Der Erfindung liegt die Aufgabe zugrunde, eine hohlgegossene Kurbelwelle mit hoher mechanischer Stabilität zu schaffen, die in Serie herstellbar und in Brennkraftmaschinen dauerhaft einsetzbar ist, sowie ein Verfahren und eine Blockform für die Herstellung einer derartigen Kurbelwelle bereitzustellen.

Diese Aufgabe wird erfindungsgemäß gelöst durch eine gegossene Kurbelwelle mit den Merkmalen des Anspruches 1.

Dadurch, daß die erfindungsgemäße Kurbelwelle hohlgegossen ist (Hohlwelle), d.h. einen Hohlraum aufweist, der aufgrund besonderer gießtechnischer Maßnahmen freigespart ist, läßt sich eine hohe Gewichtsreduktion erreichen, was sich vorteilhaft auf den Kraftstoffverbrauch, auf die Emissionswerte und das Laufverhalten der Maschine auswirkt. Der Hohlraum muß nicht über die gesamte Länge der Kurbelwelle hinweg durchgängig ausgebildet sein, sondern er kann auch aus mehreren Hohlraumeinheiten gebildet sein. Eine Hohlraumeinheit kann sich beispielsweise über den Bereich eines Pleuel-Lagerzapfens, der angrenzenden Wange bis zu dem benachbarten Kurbelwellen-Lagerzapfen erstrecken; alternativ könnte eine Hohlraumeinheit den Bereich eines Pleuel-Lagerzapfens, die beiden seitlich daran links und rechts anschließenden Kurbelwangen und die folgenden Kurbelwellen-Lagerzapfen (oder Teile davon) umfassen, usw..

Beim Maschinenbetrieb ist die Kurbelwelle starken mechanischen Belastungen ausgesetzt, wie z.B. Drehmonenten, Torsionskräften, Biegekräften, Biegewechselspannungen und anderen Spannungen, Schwingungen, Drehschwingungen usw.. Durch das in dem freigesparten Hohlraum vorgesehene, erfindungsgemäße Versteifungselement wird erreicht, daß trotz der hohlen Ausführung der Kurbelwelle die für den Wellenbetrieb in einem Motor erforderliche mechanische Stabilität bzw. Belastbarkeit der Kurbelwelle, insbesondere die Torsions- und Biegesteifigkeit der Kurbelwelle, gegeben ist. Das erfindungsgemäße, vorteilhafterweise in Form einer Verstrebung, Rippe, Wand oder dergleichen ausgebildete Versteifungselement, das sich im Hohlraum von einem Pleuel-Lagerzapfen über die daran angrenzende Kurbelwange zu dem benachbarten Kurbelwellen-Lagerzapfen erstreckt (also längs zur Kurbelwellenachse angeordnet ist), bewirkt beim Motorbetrieb einen gezielten Kraftfluß, der von dem jeweiligen Pleuellagerzapfen die Belastungen, die aus den Zünddrücken des dem Zapfen zugeordneten Zylinders resultieren, abführt. Dies bedeutet, daß die auf das Pleullager einwirkenden Kräfte gezielt in Richtung auf das benachbarte Kurbelwellenlager weitergeleitet werden. Vorteilhafterweise erstreckt sich das erfindungsgemäße Versteifungselement in dem Hohlraum von einem Pleuel-Lagerzapfen aus nach rechts und links zu dem jeweils benachbarten rechten und linken Kurbelwellen-Lagerzapfen, um die auftretenden Kräfte gleichmäßig in Richtung auf die Kurbelwellenlager (Grundlager) weiterzuleiten.

Obwohl das Versteifungselement in Längsrichtung der Welle durchgängig ausgebildet ist, kann es in seinem Verlauf quer zur Kurbelwellenlängserstreckung ausgebildete Öffnungen aufweisen. Diese resultieren daraus, daß es für den Gießprozeß vorteilhaft ist, wenn die zur Formgebung des Hohlraumes benötigten Innenkerne beidseits des späteren Versteifungselementes für eine sichere Lagerung miteinander über Stege verbunden sind. Außerdem erleichtern derartige Querverbindungen nach dem Gießen die vollständige Entfernung des Kernmaterials.

Das erfindungsgemäße durchgängige Versteifungselement kann in dem Hohlraum im wesentlichen zentral, d.h. mittig (in der Symmetrieebene liegend), angeordnet sein. Alternativ können beispielsweise auch zwei (oder mehrere) im wesentlichen symmetrisch zur Mitte angeordnete durchgängige Versteifungselemente in z.B. V-förmiger oder paralleler Anordnung oder ein mittiges und mehrere seitliche durchgängige Versteifungselemente vorgesehen sein, die über die Kurbelwange zu dem benachbarten Kurbelwellen-Lagerzapfen führen. In einer vorteilhaften Weiterbildung der Erfindung können also von einem Pleuel-Lagerzapfen aus mehrere durchgängige Versteifungselemente vorgesehen sein. Bei mehreren durchgängigen Versteifungselementen ist es auch möglich, daß sich nicht alle Versteifungselemente bis in den Hohlraum des jeweiligen Kurbelwellen-Lagerzapfens erstrecken, sondern die äußeren Versteifungselemente können z.B. in den Mantel des Kurbelwellen-Lagerzapfens führen.

Ferner kann es zur weiteren Stabilitätserhöhung vorteilhaft sein, wenn zusätzlich zu dem mindestens einen erfindungsgemäßen durchgängigen Versteifungselement in dem Hohlraum Versteifungselemente vorgesehen sind, die nicht durchgängig ausgebildet sind, d.h. die z.B. lokal in einem Bereich (Bereich eines Pleuel-Lagerzapfens, einer Kurbelwange bzw. eines Kurbelwellen-Lagerzapfens) vorhanden sind. Diese können vorteilhafterweise in Form von Rippen, Stegen, Streben, Wänden, Wandelementen oder dergleichen ausgebildet sein.

Insgesamt hängen Anzahl, Art, Ausbildung, Anordnung und Dimensionierung der Versteifungselemente (durchgängig und/oder nicht durchgängig) von den konkreten Einsatzbelastungen der jeweiligen Kurbelwelle ab, z.B. von der Zylinderzahl und Maschinenart, und lassen sich durch FE-Berechnungen, d.h. Berechnungen nach der Finite-Elemente-Methode, ermitteln.

Erfindungsgemäß sind gießtechnisch bedingte Öffnungen in der Außenkontur der Kurbelwelle in mechanisch weniger stark beanspruchten Bereichen ausgebildet, und die Kurbelwelle weist ansonsten eine im wesentlichen geschlossene Außenkontur auf. Damit wird eine hohe mechanische Stabilität der Kurbelwelle erzielt. "Mechanisch weniger stark beanspruchte Bereiche" sind Bereiche, in denen der aus den Zünddrücken der Zylinder resultierende Kräftefluß gering ist. Dies sind insbesodere die Konturenbereiche der Massenausgleiche. Dabei beginnt der Konturenbereich eines Massenausgleiches an der von dem Pleuellager abgewandten Seite der Kurbelwelle dort, wo das betreffende Kurbelwellenlager endet. Gießtechnisch sind Öffnungen in der Außenkontur der Kurbelwelle dadurch bedingt, daß für die Hohlraumbildung die Innenkerne über Stützen, Kernriegel oder dergleichen sicher gelagert werden müssen. Über die Öffnungen wird aus der gegossenen Kurbelwelle das Kernmaterial aus dem Hohlraum entfernt. Weitere Öffungen sind an den Stirnseiten der gegossenen Kurbelwelle ausgebildet. Dadurch, daß die Außenkontur der erfindungsgemäßen Kurbelwelle somit im wesentlichen geschlossen ist, wird ferner die Gefahr verringert, daß beim Motorbetrieb Öl in den Hohlraum der Kurbelwelle gelangen und zu Unwuchten führen kann.

Falls es für eine bessere Kernlagerung und das Entfernen von Kernmaterial nach dem Gießen zweckmäßig sein sollte, besteht in Abhängigkeit von der konkreten Ausführung der Kurbelwelle die Möglichkeit, in den Konturenbereichen jeweils auf Achsmitte des Pleuellagers und Kurbelwellenlagers kleindimensionierte Öffnungen (z.B. mit einem Durchmesser von ca. 8 mm) in der Außenkontur der Kurbelwelle auszubilden. Bei entsprechender Konzeption der Kurbelwelle bleibt trotz dieser Öffnungen eine ausreichende mechanische Stabilität erhalten. Gegebenenfalls sind solche Öffnungen im Rahmen von Nachbearbeitungsmaßnahmen wieder zu verschließen.

Die Herstellung einer hohlgegossenen Kurbelwelle mit einem oder mehreren eingegossenen Versteifungselementen und im wesentlichen geschlossener Außenkontur erfolgt erfindungsgemäß in einem konventionellen Gießverfahren mit verlorener Form. Eine erfindungsgemäße Kurbelwelle wird also auf herkömmlichem Wege erzeugt mit Hilfe fester Gießkerne, die in einer festen Außenform gelagert sind. Geeignete Gußmaterialien sind insbesondere Gußeisen in verschiedenen Ausführungen, Legierungen und Behandlungen.

Konventionelles Gießverfahren mit verlorener Form, bei dem feste Gießkerne in einer festen Außenform gelagert sind, bedeutet, daß für die Bildung der Außenkontur der Kurbelwelle feste Außenformen (z.B. Maskenformen, Handformen, Maschinenformen) und für die Bildung der Innenkontur der Kurbelwelle insbesondere Sandkerne, die in die Außenform eingelegt werden, zum Einsatz kommen. Verlorene Außenformen umfassen in der Regel einen mineralischen, feuerfesten, körnigen Grundstoff mit einem Bindemittel sowie oft mit verschiedenen Zusätzen (z.B. zur Erzielung guter Oberflächen). Nach jedem Abguß werden derartige Außenformen zerstört. Sandkerne für die Bildung der Innenkontur sind in bekannter Weise mit unterschiedlichen und üblichen Fertigungsverfahren herstellbar.

Nicht zu den konventionellen Gießverfahren gemäß dieser genannten Definition zählt das Lost Foam Gießverfahren, bei welchem keine festen, geteilten Außenformen und in diese eingelagerte Sandkerne verwendet werden. Das Lost Foam Verfahren arbeitet nach einem anderen Gießprinzip. Beim Lost Foam Gießverfahren ist die verlorene Form ein Schaumstoffmodell, das in Maß, Innen- und Außenaufbau der zu gießenden Kurbelwelle entspricht. Der spätere Hohlraum der Kurbelwelle wird mit einem losen Formmedium gefüllt, und das Schaumstoffmodell wird zum Gießen in ein loses Formmedium (z.B. in bindemittelfreien Formsand, feinkörnigen Stahlkies usw.) eingebettet.

Ein Problem, mit einem konventionellen Gießverfahren eine hohl ausgeführte Kurbelwelle mit Versteifungselement zu erzeugen, kommt daher, daß die Pleuel-Lagerzapfen, d.h. die Kurbeln, in unterschiedlichen Winkelstellungen angeordnet sind, was zu Schwierigkeiten bei der Herstellung der Gießformen und der Innenkerne führt. Außerdem muß nach dem Gießen der Hohlraum trotz Versteifungselement(e) rückstandsfrei entkernbar sein.

In einer vorteilhaften Ausführung der Erfindung ist eine Kurbelwelle, bei der die Pleuel-Lagerzapfen in einer Ebene liegen, insbesondere eine Vierzylinder-Kurbelwelle, im Masken-gießverfahren hergestellt. Weil bei einer derartigen Kurbelwelle die Pleuel-Lagerzapfen in einer Ebene (0° bzw. 180°) liegen, kann eine längsgeteilte Außenform (Formmaske) zum Einsatz kommen. In die längsgeteilte Außenform werden entsprechende Innenkerne für die Ausbildung des Hohlraumes und des Versteifungselementes, die über Kernstützen bzw. Kernriegel gelagert werden, eingebaut. Dabei ist zu beachten, daß die Lagerung, die zu Öffnungen der Außenkontur bei der fertig gegossenen Kurbelwelle führt, in Bereichen erfolgt, die nicht stark kräftebelastet sind, um die mechanische Stabilität der Kurbelwelle nicht zu mindern.

Kurbelwellen für einen Motor mit einer höheren Zylinderzahl (insbesondere mit Sechszylindern und mehr), bei denen die Pleuellagerzapfen nicht in einer Ebene liegen, sind gemäß einer weiteren vorteilhaften Ausführung der Erfindung in einem Kernblock-Gießverfahren hergestellt. Um die unterschiedlichen Winkelstellungen der Pleuel-Lagerzapfen und den Hohlraum mit Versteifungselement(en) zu realisieren, wird die Außenform (Blockform) für die Außenkontur-Formgebung der Kurbelwelle erfindungsgemäß über die Länge der Welle längs und quer geteilt. Die Teilung quer zur Kurbelwellenlängsachse ist erforderlich, um die unterschiedlichen Winkelstellungen der Pleuel-Lagerzapfen zu realisieren. Durch die Querteilung entstehen mehrere Kernblockeinheiten (auch Etagenkerne genannt). Die Kernblockeinheiten werden wiederum jeweils längs geteilt (Teilung längs zur Kurbelwellenlängsachse), um entsprechend dem späteren verbleibenden Hohlraum geformte Innenkerne einbauen zu können. Auch beim Kernblock-Gießverfahren ist zu beachten, daß die Lagerung der Innenkerne, die zu Öffnungen der Außenkontur bei der fertig gegossenen Kurbelwelle führt, in Bereichen erfolgt, die nicht stark kräftebelastet sind, um die mechanische Stabilität der Kurbelwelle nicht zu mindern. Die Lagerung erfolgt an geeigneten Stellen über entsprechende Kernriegel bzw. Kernstützen. Geeignete Lagerungsorte sind insbesondere die Konturenbereiche der Massenausgleiche der Kurbelwelle. Die Innenkerne beidseits eines späteren Versteifungselementes können vorteilhafterweise miteinander verbunden sein, was zu lokalen Öffnungen in dem/den späteren Versteifungselement(en) führt. Wenn diese Öffnungen jedoch klein dimensioniert sowie richtig ausgebildet und angeordnet sind, behindern sie nicht den Kräftefluß. Die an den Stirnseiten der späteren Kurbelwelle angeordneten Innenkerne können an den seitlichen Rändern in der Außenform gelagert sein.

Das Prinzip des erfindungsgemäßen Kernblock-Gießverfahrens für die Herstellung einer erfindungsgemäßen Kurbelwelle beruht also darauf, daß die komplette Blockform gebildet wird, indem mehrere Kernblockeinheiten, die jede für sich wiederum längsgeteilt sind und in die entsprechende Innenkerne einmontiert sind, etagenartig übereinander gestapelt bzw. liegend nebeneinander angeordnet werden. Anschließend wird die Kurbelwelle auf konventionellem Wege gegossen. Der Kernstapel wird i.d.R. stehend gegossen, kann aber mit besonderen Vorkehrungen auch liegend gegossen werden. Die Kurbelwelle wird aus der Blockform entnommen, und das Kernmaterial der Innenkerne durch die Lagerungsöffnungen entfernt.

Es werden mehrere Kernblockeinheiten (Etagenkerne) in Längs- und Querteilung, je nach Ausführung der Konstruktion und Festlegung der Zündfolge, ausgeführt. Die erforderliche Stückzahl der Kernblockeinheiten hängt also von der jeweiligen Konzeption der Kurbelwelle bzw. des Motors ab. Durch den Aufbau der Blockform aus entsprechenden Kernblockeinheiten ist es möglich, Kurbelwellen mit jeder gewünschten Winkelstellung der Pleuel-Lagerzapfen zu erzeugen.

In einer vorteilhaften Ausführung der Erfindung sind die Öffnungen in den Massenausgleichen vorgesehen. Die Massenausgleiche sind Bereiche der Kurbelwelle, die mechanisch wenig beansprucht sind, d.h. in denen der aus den Zünddrücken der Zylinder resultierende Kräftefluß gering ist. D.h. beim Gießen erfolgt die Lagerung der Innenkerne im Bereich der späteren Massenausgleiche über entsprechende Kernriegel oder dergleichen. Öffnungen der Außenkontur der Kurbelwelle in diesen Bereichen schwächen nicht die mechanische Stabilität der Kurbelwelle. Alternativ könnten Öffnungen auch in Bereichen zwischen Kurbelwellenlagern und Massenausgleich vorgesehen sein. Öffnungen in den Massenausgleichen selbst haben jedoch den Vorteil, daß die Gefahr, daß beim Motorbetrieb spritzendes Öl in den Innenraum der Kurbelwelle eindringt, geringer ist bzw. daß ggf. doch eingetretenes Öl infolge der beim Motorbetrieb auftretenden Fliehkraft wieder herausgeschleudert wird. Vorzugsweise können die Öffnungen jeweils im unteren Bereich der Massenausgleiche ausgebildet sein, um diese Wirkung zu verstärken. Alternativ könnten die Massenausgleiche vorteilhaft auch seitlich geöffnet sein, und zwar an den Seiten, die nicht in Drehrichtung der Kurbelwelle liegen.

Eine weitere vorteilhafte Maßnahme, um das Eindringen von Öl in den Hohlraum der Kurbelwelle zu verhindern, besteht darin, daß die Öffnungen eine spezielle Formgebung aufweisen (z.B. labyrinthartig, Abrißkanten an der Außenkontur des Massenausgleiches, veränderte Geometrie des Massenausgleiches (ungleiche Wangen) usw.), so daß der Eintritt von Öl in den Hohlraum verhindert wird.

Gemäß einer vorteilhaften Weiterbildung der Erfindung sind die äußeren Ränder der Massenausgleiche verlängert ausgebildet, d.h. in Form von Abrißkanten realisiert. Durch diese Maßnahme wird an den Massenausgleichen anhaftendes Öl bei Rotation der Kurbelwelle durch die Fliehkraftwirkung zu den Abrißkanten gedrängt und weggeschleudert, so daß es nicht durch die Öffnungen in den Hohlraum der Kurbelwelle eindringen und dort zu Unwuchten führen kann.

Gemäß einer vorteilhaften Ausführung der Erfindung verlaufen die Ölkanäle in einem Versteifungselement und sind nachträglich in die gegossene Kurbelwelle eingebracht, z.B. gebohrt. Derartige Ölkanäle können relativ schmal ausgeführt sein, so daß das betreffende Versteifungselement ebenfalls eine relativ geringe Breite aufweisen können/kann, was sich vorteilhaft auf die Reduktion des Kurbelwellengewichts auswirkt.

Gemäß einer alternativen, vorteilhaften Weiterbildung der Erfindung sind die Ölkanäle in Form von bei der Kurbelwellenherstellung eingegossenen Röhrchen ausgebildet. Derartige Röhrchen werden bei der Herstellung des betreffenden Innenkerns in diesen eingeschossen oder einmontiert. Ein derartiges Einbringen der Ölkanäle ist verfahrenstechnisch einfacher zu realisieren als ein nachträgliches Einbringen der Ölkanäle, und es fallen keine Bohrrückstände an. Ein weiterer Vorteil ist, daß der Ölkanal nicht in einem Versteifungselement verlaufen muß, so daß eine größere Freiheit bei der Ausbildung und Anordnung des versteifungselementes bzw. der Versteifungselemente gegeben ist.

Gemäß einer weiteren alternativen, vorteilhaften Ausführung der Erfindung können bei der Kurbelwellenherstellung durch spezielle Kerne Hohlräume freigesparte sein, die später ein Ölreservoir für die Lagerschmierung bilden. Beispielsweise durch nachträglich eingebrachte Bohrungen können die Verbindungen zu den betreffenden Lagern hergestellt sein.

Ferner wird die oben genannte Aufgabe erfindungsgemäß gelöst durch ein Verfahren zur Herstellung einer erfindungsgemäßen, in einem konventionellen Gießverfahren mit verlorener Form hohlgegossenen Kurbelwelle mit durchgängigem Versteifungelement mit den im kennzeichnenden Teil des Anspruches 11 angegebenen Merkmalen. Die einzelnen Verfahrensmaßnahmen wurden weiter oben bereits beschrieben.

Für das Vorsehen von Ölkanälen in der Kurbelwelle gibt es mehrere Möglichkeiten: Für spätere Ölkanäle können gemäß einer ersten vorteilhaften Variante an entsprechenden Stellen in die Innenkerne Röhrchen eingearbeitet werden, die beim Gießen der Welle mit eingegossen werden. In einer zweiten vorteilhaften Variante werden die Ölkanäle in die gegossene Kurbelwelle durch mechanische, spanabhebende Bearbeitung eingebracht, z.B. gebohrt. Ferner besteht die vorteilhafte Möglichkeit, durch Einlegen von Kernen Hohlräume freizusparen, die später als Ölreservoir für die Lagerschmierung dienen.

Die oben genannte Aufgabe wird darüber hinaus erfindungsgemäß gelöst mit einer Blockform mit den im kennzeichnenden Teil des Anspruches 14 angegebenen Merkmalen. Eine erfindungsgemäße Blockform wurde weiter oben bereits beschrieben.

In den Zeichnungen sind exemplarisch Ausführungsbeispiele einer erfindungsgemäßen Kurbelwelle dargestellt. Es zeigen:
- Fig. 1: einen schematischen Querschnitt durch einen Pleuel-Lagerzapfen einer erfindungsgemäßen Kurbelwelle,
- Fig. 2: einen schematischen Querschnitt durch eine Kurbelwange mit Massenausgleich der erfindungsgemäßen Kurbelwelle,
- Fig. 2a: einen ausschnittsweisen Schnitt entsprechend der Linie X-X aus Fig. 2,
- Fig. 3: einen schematischen Querschnitt durch einen Kurbelwellen-Lagerzapfen der erfindungsgemäßen Kurbelwelle,
- Fig. 4: eine Abwandlung zu Fig. 2,
- Fig. 5: eine erfindungsgemäße Blockform im schematischen Längsschnitt und
- Fig. 6: die Blockform aus Fig. 5 im schematischen Querschnitt.

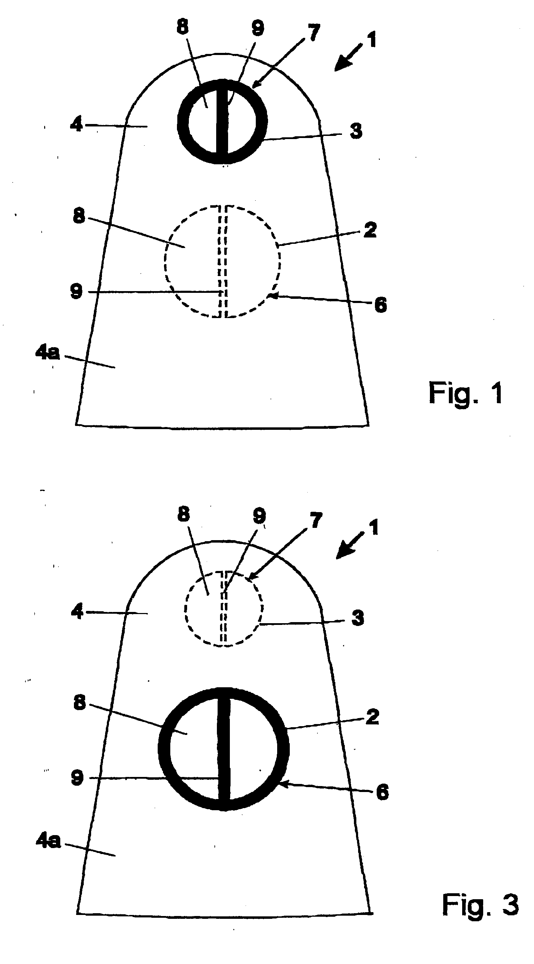

Die in den Fig. 1 bis 3 ausschnittsweise dargestellte gegossene hohle Kurbelwelle 1 weist Kurbelwellen-Lagerzapfen 2 für die Lagerung der Kurbelwelle 1 in Wellenlagern, Pleuel-Lagerzapfen 3 für die Lagerung von Pleuelstangen in Pleuellagern, Kurbelwangen 4, Massenausgleiche 4a und Ölkanäle auf. Die Ölkanäle, die in dem gezeigten Ausführungsbeispiel nicht dargestellt sind, da sie hier nachträglich durch mechanische, spanabhebende Bearbeitung in das Gußteil eingebracht werden, verlaufen jeweils vom Außenumfang 6 eines Kurbelwellen-Lagerzapfens 2 zum Außenumfang 7 eines Pleuel-Lagerzapfens 3 und dienen der Lagerschmierung. Alternativ könnten die Ölkanäle auch in Form eingegossener Rohre ausgebildet sein.

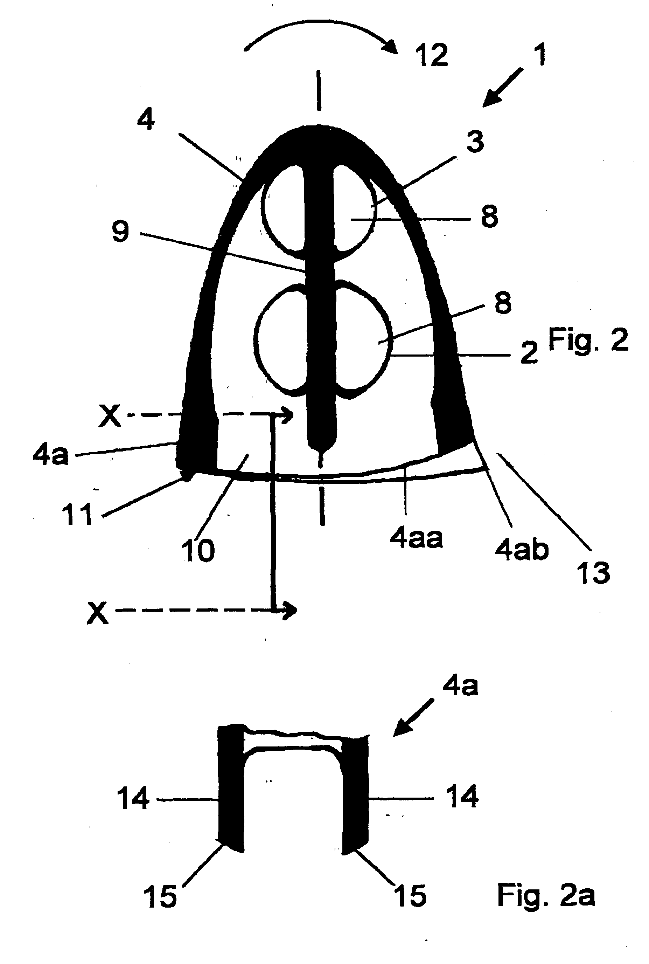

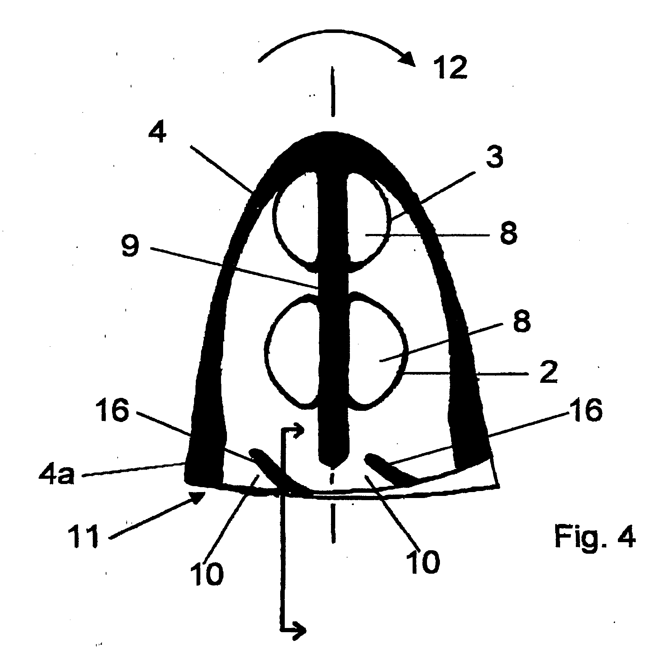

Die Kurbelwelle 1 ist in einem konventionellen Gießverfahren mit verlorener fester Außenform und in diese eingelagerten Gießkernen - und zwar hier vorteilhaft in einem Kernblock-Gießverfahren - hohlgegossen und weist, wie insbesondere durch eine Zusammenschau der Fig. 1, 2 und 3 zu erkennen ist, einen Hohlraum 8 auf, der sich über einen Pleuel-Lagerzapfen 3, eine Kurbelwange 4 und einen Kurbelwellen-Lagerzapfen 2 hinweg erstreckt. In dem Hohlraum 8 ist zur Erhöhung der mechanischen Belastbarkeit, insbesondere der Torsions- und Biegesteifigkeit, der Kurbelwelle 1 ein durchgängiges Versteifungselement 9 vorgesehen, das von dem Pleuel-Lagerzapfen 3 (vgl. Fig. 1) über die daran angrenzende Kurbelwange 4 (vgl. Fig. 2) zu dem benachbaren Kurbelwellen-Lagerzapfen 2 (vgl. Fig. 3) durchgängig verläuft.

In dem Ausführungsbeispiel ist in dem Hohlraumbereich "Pleuel-Lagerzapfen angrenzende Kurbelwange - benachbarter Kurbelwellen-Lagerzapfen" ein in Längsrichtung durchgängiges Versteifungselement 9 vorgesehen, das im wesentlichen mittig im Hohlraum 8 angeordnet ist. Das durchgängige Versteifungselement 9 ist hier vorteilhaft wandartig ausgebildet, d.h. es verläuft von einer Seite der Hohlraumwandung zur gegenüberliegenden Seite der Hohlraumwandung. Je nach Belastungsanforderungen könnten alternativ auch mehrere durchgängige Versteifungselemente 9 vorgesehen sein, wobei nicht immer ein mittig angeordnetes Versteifungselement erforderlich ist. Ferner könnten zur Stabilitätserhöhung zusätzlich zu mindestens einem durchgängigen Versteifungselement 9 auch nichtdurchgängige Versteifungselemente vorgesehen sein. Quer zum Längsverlauf des Versteifungselementes 9 können in dem Versteifungselement gießtechnisch bedingte Öffnungen ausgebildet sein.

Dem durchgängigen, hier als Wand ausgebildeten Versteifungselement 9 kommt eine große Bedeutung für die Erhöhung der Torsions- und Biegesteifigkeit der Kurbelwelle 1 zu. Durch die Ausbildung und Anordnung des Versteifungselementes 9 wird beim Motorbetrieb ein gezielter Kraftfluß bewirkt, der von dem Pleuel-Lagerzapfen 3 die Belastungen, die aus den Zünddrücken des dem Zapfen zugeordneten Zylinders resultieren, über die angrenzende Kurbelwange 4 gezielt in Richtung auf den benachbarten Kurbelwellen-Lagerzapfen 2 abführt. Um von einem Pleuel-Lagerzapfen 3 einen möglichst gleichmäßigen Kraftfluß zu erzielen, ist es vorteilhaft, wenn sich der Hohlraum von dem Pleuel-Lagerzapfen 3 aus in beide Richtungen zu dem linken und rechten benachbarten Kurbelwellen-Lagerzapfen 2 erstreckt und das Versteifungelement 9 entsprechend von dem Pleuel-Lagerzapfen 3 aus durchgängig zu dem linken und rechten benachbarten Kurbelwellen-Lagerzapfen 2 verläuft.

Ferner ist insbesondere in Fig. 2 zu erkennen, daß eine gießtechnisch bedingte Öffnung (Kernöffnung) 10 in dem mechanisch weniger stark belasteten Konturenbereich des Massenausgleiches 4a vorgesehen ist, und die Kurbelwelle 1 eine ansonsten im wesentlichen geschlossene Außenkontur aufweist. Dadurch weist die erfindungsgemäße Kurbelwelle 1 eine hohe mechanische Stabilität auf, d.h. durch die Öffnung wird die Torsions- und Biegesteifigkeit der Kurbelwelle 1 nicht vermindert. Die Öffnung 10 ist dadurch bedingt, daß für die Hohlraumausbildung im konventionellen Gießverfahren Innenkerne benötigt werden, die in der Außenform über Kernstützen, Kernriegel oder dergleichen gelagert werden müssen. Außerdem wird die Kurbelwelle 1 über die Öffnungen 10 nach dem Gießen rückstandsfrei entkernt.

Die Öffnung 10 ist in dem gezeigten Ausführungsbeispiel (Fig. 2) vorzugsweise im unteren Bereich 11 des Massenausgleiches 4a ausgebildet. Diese Anordnung ist vorteilhaft, da hier die Gefahr gering ist, daß Öl in den Innenraum der Kurbelwelle gelangt, was zu Unwuchten führen kann. Ggf. eingedrungenes Öl wird infolge der rotationsbedingten Fliehkraft wieder aus dem Hohlraum 8 herausgeschleudert und kann sich nicht ansammeln. Die Kernöffnung 10 erstreckt sich hier im wesentlichen über die gesamte Breite des Massenausgleiches 4a. Alternativ könnte auch eine kleinere Kernöffnung oder mehrere kleine Kernöffnungen vorgesehen sein.

Um die Gefahr des Eindringens von Öl weiter zu verringern, sind in dem Ausführungsbeispiel weitere vorteilhafte Maßnahmen realisiert. Zum einen sind die vordere Wange 4aa und die hintere Wange 4ab des Massenausgleiches 4a unterschiedlich lang ausgebildet, so daß bei einer Rotation der Kurbelwelle entsprechend der Pfeilrichtung 12 ein Freiraum 13 (eine Art "Windschatten") am unteren Rand des Massenausgleiches 4a entsteht und Öl von der Kernöffnung 10 abgelenkt wird. Zum anderen sind die äußeren Ränder 14 des Massenausgleiches 4a verlängert und spitz zulaufend ausgebildet, so daß definierte Abrißkanten 15 entstehen (vgl. Fig 2a). Anhaftendes Öl wird an den Abrißkanten 15 bei Rotation der Welle gezielt weggeschleudert, so daß es nicht in den Hohlraum 8 eindringen kann. Eine weitere vorteilhafte Maßnahme, das Eindringen von Öl zu verhindern, ist in Fig. 4 angedeutet. Hier sind mehrere Öffnungen 10 im unteren Bereich 11 des Massenausgleiches 4a vorgesehen, die derart gestaltet sind, daß das Eindringen von Öl erschwert ist, und zwar sind hier ölabwehrende Zusatzrippen 16 vorgesehen. Zahlreiche weitere vorteilhafte Maßnahmen zum Verringern der Öleindringgefahr sind möglich.

Die nicht abgebildeten Abschnitte der Kurbelwelle 1 sind vorzugsweise entsprechend dem vorstehend Beschriebenen ausgebildet.

Die Erfindung wurde in dem Ausführungsbeispiel exemplarisch für eine mögliche Art einer mit einem konventionellen Gießverfahren hohlgegossenen Kurbelwelle 1 beschrieben. Dabei handelt es sich jedoch nur um eine konkrete Möglichkeit, um für einen Motor die erforderliche Stabilität seiner Kurbelwelle 1 zu erhalten. Auch andere Variationen von Anzahl, Art, Ausbildung und Anordnung von Versteifungselementen 9 können zum gleichen Erfolg führen. Diese Faktoren lassen sich durch FE-Berechnungen ermitteln.

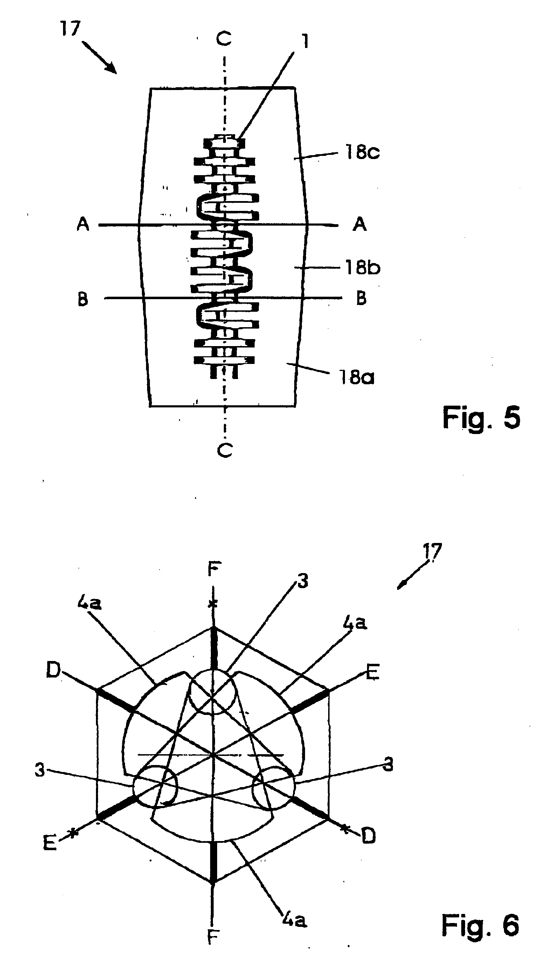

Eine erfindungsgemäße Kernblockform (Blockform) 17 zum Herstellen einer erfindungsgemäßen Kurbelwelle 1 im Kernblock-Gießverfahren ist in den Fig. 5 und 6 dargestellt. Dabei ist die in Fig. 5 dargestellte Sechszylinder-Kurbelwelle 1 rein exemplarisch zu verstehen. Zu erkennen ist, daß die Blockform 17 längs und quer geteilt ausgebildet ist. Und zwar sind durch Querteilung an den Schnittlinien A-A, B-B mehrere Kernblockeinheiten 18a, 18b, 18c (hier exemplarisch drei Stück) gebildet. Durch die Querteilung und Anordnungsfreiheit der Kernblockeinheiten 18 lassen sich beliebige Winkelstellungen der Pleuel-Lagerzapfen 3 realisieren. Die Kernblockeinheiten 18 sind wiederum jeweils längsgeteilt (entsprechend den Schnittlinien C-C in Fig. 5 bzw. D-D, E-E, F-F in Fig. 6). Durch die Längsteilung lassen sich in die Kernblockeinheiten 18 Innenkerne einbauen zur Ausbildung des Hohlraumes 8 und zur Ausgestaltung des Versteifungselementes 9. Die Innenkerne sind in den Konturenbereichen der Massenausgleiche 4a in der Außenform gelagert.

Nach Montage der Innenkerne werden die Hälften der Kernblockeinheiten 18 jeweils zusammengefügt und die Kernblockeinheiten 18 in dem Ausführungsbeispiel etagenartig übereinander gestapelt, so daß eine Blockform 17 entsprechend Fig. 5 gebildet wird. Anschließend wird die Kurbelwelle 1 auf konventionellem Wege hier stehend gegossen. Die Kurbelwelle 1 wird aus der Blockform 17 entnommen, und das Kernmaterial der Innenkerne durch die Lagerungsöffnungen entfernt.

Die in Fig. 5 und 6 abgebildete Anzahl an Kernblockeinheiten 18 und die dargestellten Winkelstellungen der Pleuel-Lagerzapfen 3 bei der gezeigten Kurbelwelle 1 sind beispielhaft zu werten. Erfindungsgemäß werden mehrere Kernblockeinheiten (Etagenkerne) 18 in Längs- und Querteilung, je nach Ausführung der Konstruktion und Festlegung der Zündfolge, ausgeführt. Die erforderliche Stückzahl der Kernblockeinheiten 18 hängt also von der jeweiligen Konzeption der Kurbelwelle 1 bzw. des Motors ab und variiert daher von Kurbelwelle zu Kurbelwelle. Durch den Aufbau der Blockform 17 aus einer beliebigen zweckmäßigen Anzahl von Kernblockeinheiten 18 ist es möglich, Kurbelwellen 1 mit jeder gewünschten Winkelstellung der Pleuel-Lagerzapfen 3 zu erzeugen.

### Bezugszeichenliste

- 1: Kurbelwelle
- 2: Kurbelwellen-Lagerzapfen
- 3: Pleuel-Lagerzapfen
- 4: Kurbelwange
- 4a: Massenausgleich
- 4aa: vordere Wange von 4a
- 4ab: hindere Wange von 4a
- 6: Außenumfang von 2
- 7: Außenumfang von 3
- 8: Hohlraum
- 9: Versteifungselement
- 10: Öffnung, Kernöffnung
- 11: unterer Bereich von 4a
- 12: Pfeilrichtung
- 13: Freiraum
- 14: äußerer Rand von 4a
- 15: Abrißkante
- 16: Zusatzrippe
- 17: Blockform
- 18: Kernblockeinheiten (18a, 18b, 18c)

- A-A: Querteilung von 17
- B-B: Querteilung von 17
- C-C: Längsteilung von 18 (allgemein)
- D-D: Längsteilung von 18a
- E-E: Längsteilung von 18b
- F-F: Längsteilung von 18c

## Patentansprüche

1. Gegossene hohle Kurbelwelle mit Kurbelwellen-Lagerzapfen (2), Pleuel-Lagerzapfen (3), Kurbelwangen (4), Massenausgleichen (4a), Ölkanälen (5), die jeweils vom Außenumfang (6) eines Kurbelwellen-Lagerzapfens (2) zum Außenumfang (7) eines Pleuel-Lagerzapfens (3) verlaufen und der Lagerschmierung dienen, und einem Hohlraum (8), der sich über einen Kurbelwellen-Lagerzapfen (2), eine Kurbelwange (4) und einen Pleuel-Lagerzapfen (3) erstreckt,
wobei die Kurbelwelle (1) in einem konventionellen Gießverfahren mit verlorener Form, bei welchem feste Gießkerne in einer festen Außenform gelagert sind, hohlgegossen ist,
wobei in dem Hohlraum (8) zur Erhöhung der mechanischen Belastbarkeit, insbesondere der Torsions- und Biegesteifigkeit, der Kurbelwelle (1) ein durchgängiges Versteifungselement (9) vorgesehen ist, das von einem Pleuel-Lagerzapfen (3) über eine daran angrenzende Kurbelwange (4) zu einem benachbarten Kurbelwellen-Lagerzapfen (2) durchgängig verläuft,
wobei gießtechnisch bedingte Öffnungen (10) in den mechanisch weniger stark belasteten Konturenbereichen der Massenausgleiche (4a) vorgesehen sind, und die Kurbelwelle (1) eine ansonsten im wesentlichen geschlossene Außenkontur aufweist.

2. Gegossene hohle Kurbelwelle nach Anspruch 1,
wobei die Kurbelwelle (1) im Masken-Gießverfahren gegossen ist.

3. Gegossene hohle Kurbelwelle nach Anspruch 1,
wobei die Kurbelwelle (1) im Kernblock-Gießverfahren gegossen ist.

4. Gegossene hohle Kurbelwelle nach einem der vorhergehenden Ansprüche,
wobei die Öffnungen (10) im unteren Bereich (11) der Massenausgleiche (4a) ausgebildet sind.

5. Gegossene hohle Kurbelwelle nach einem der vorhergehenden Ansprüche,
wobei die Öffnungen (10) derart gestaltet sind, daß der Eintritt von Öl in den Hohlraum (8) verhindert ist.

6. Gegossene hohle Kurbelwelle nach einem der vorhergehenden Ansprüche,
wobei die äußeren Ränder (14) der Massenausgleiche (4a) in Form von Abrißkanten (15) realisiert sind.

7. Gegossene hohle Kurbelwelle nach einem der vorhergehenden Ansprüche,
wobei in dem Hohlraum (8) mehrere Versteifungselemente vorgesehen sind. ,

8. Gegossene hohle Kurbelwelle nach Anspruch 7,
wobei die Versteifungselemente in Form einer Rippe, eines Steges, einer Strebe, einer Wand oder dergleichen ausgebildet sind.

9. Gegossene hohle Kurbelwelle nach einem der vorhergehenden Ansprüche,
wobei die Ölkanäle in Form von bei der Kurbelwellenherstellung eingegossenen Röhrchen ausgebildet sind.

10. Gegossene hohle Kurbelwelle nach einem der Ansprüche 1 bis 8,
wobei die Ölkanäle in einem Versteifungselement (9) verlaufen und nachträglich in die gegossene Kurbelwelle (1) eingebracht sind.

11. Verfahren zur Herstellung einer erfindungsgemäßen, in einem konventionellen Gießverfahren mit verlorener Form hohlgegossenen Kurbelwelle (1) mit durchgängigem Versteifungselement (9) nach einem der Ansprüche 1 bis 10,
**dadurch gekennzeichnet, daß**
für das Gießen der Kurbelwelle (1) im Kernblock-Gießverfahren in Kernblockeinheiten (18), die durch eine Teilung der Form quer zur Kurbelwellenlängserstreckung gebildet worden sind und die wiederum jeweils längs zur Kurbelwellenlängserstreckung geteilt worden sind, Innenkerne zur Hohlraumformgebung und zur Ausbildung des Versteifungselementes (9), das von einem Pleuel-Lagerzapfen (3) über eine daran angrenzende Kurbelwange (4) zu einem benachbarten Kurbelwellen-Lagerzapfen (2) durchgängig verläuft, eingebaut werden, wobei die Innenkerne über Kernriegel oder dergleichen in Bereichen der späteren Kurbelwelle gelagert werden, die bei Motorbetrieb weniger stark mechanisch belastet werden - vorzugsweise in den Konturenbereichen der Massenausgleiche (4a)-,
die Kernblockeinheiten (18) zur kompletten Blockform (17) zusammengesetzt werden und
die Kurbelwelle (1) anschließend gegossen wird.

12. Verfahren nach Anspruch 11,
**dadurch gekennzeichnet,**
**daß** für die späteren Ölkanäle in die Innenkerne an entsprechenden Stellen Röhrchen einmontiert bzw. eingeschossen werden.

13. Verfahren nach Anspruch 11,
**dadurch gekennzeichnet,**
**daß** die Ölkanäle in die gegossene Kurbelwelle (1) durch mechanische, spanabhebende Bearbeitung eingebracht, vorzugsweise gebohrt, werden.

14. Blockform zur Herstellung einer erfindungsgemäßen, im Kernblock-Gießverfahren hohlgegossenen Kurbelwelle (1) mit durchgängigem Versteifungselement (9) nach einem der Ansprüche 1 bis 10,
**dadurch gekennzeichnet,**
**daß** die Blockform (17) quer zur Kurbelwellenlängserstreckung in mehrere Kernblockeinheiten (18) untergliedert ausgebildet ist,
**daß** die Kernblockeinheiten (18) wiederum jeweils längs zur Kurbelwellenlängserstreckung geteilt ausgebildet sind,
**daß** entsprechende Innenkerne zur Hohlraumformgebung und zur Ausbildung des Versteifungselementes (9) in die Kernblockeinheiten (18) eingebaut sind, wobei die Kernlagerung in den Konturenbereichen der Massenausgleiche (4a) erfolgt.

## Claims

1. A cast hollow crankshaft with crankshaft bearing journals (2), big end bearing journals (3), crank webs (4), mass balances (4a), oil ducts (5), each of which run from the outer circumference (6) of a crankshaft bearing journal (2) to the outer circumference (7) of a bid end bearing journal (3) and serve to lubricate the bearings, and with a cavity (8) which extends through a crankshaft bearing journal (2), a crank web (4) and a big end bearing journal (3),
wherein the crankshaft (1) is hollow cast in a conventional lost mould casting process in which solid casting cores are mounted in a solid outer mould,
wherein a continuous stiffening element (9) is provided in the cavity (8) for increasing the mechanical loading capacity, in particular the torsional and bending stiffness, of the crankshaft (1), which element runs continuously from a big end bearing journal (3) via an adjoining crank web (4) to an adjacent crankshaft bearing journal (2), and
wherein openings (10) required by the casting process are provided in the contour regions of the mass balances (4a) subjected to lower mechanical loads, and the crankshaft (1) has an otherwise essentially closed outer contour.

2. The cast hollow crankshaft according to Claim 1,
wherein the crankshaft (1) is cast in the shell casting process.

3. The cast hollow crankshaft according to Claim 1,
wherein the crankshaft (1) is cast in the core block casting process.

4. The cast hollow crankshaft according to one of the preceding claims,
wherein the openings (10) are formed in the lower region (11) of the mass balances (4a).

5. The cast hollow crankshaft according to one of the preceding claims,
wherein the openings (10) are designed in such a manner that the ingress of oil into the cavity (8) is prevented.

6. The cast hollow crankshaft according to one of the preceding claims,
wherein the outer edges (14) of the mass balances (4a) are provided in the form of tear-off edges (15).

7. The cast hollow crankshaft according to one of the preceding claims,
wherein several stiffening elements are provided in the cavity (8).

8. The cast hollow crankshaft according to Claim 7,
wherein the stiffening elements are formed in the form of a rib, a bridge, a strut, a wall or the like.

9. The cast hollow crankshaft according to one of the preceding claims,
wherein the oil ducts are designed in the form of tubes cast in during production of the crankshaft.

10. The cast hollow crankshaft according to one of Claims 1 to 8,
wherein the oil ducts run in a stiffening element (9) and are subsequently introduced into the cast crankshaft (1) .

11. A method for producing a crankshaft (1) according to the invention with a continuous stiffening element (9) hollow cast in a conventional lost mould casting process, according to one of Claims 1 to 10,
**characterised in that**
for casting the crankshaft (1) in the core block casting process inner cores for shaping the cavity and for forming the stiffening element (9), which runs continuously from a big end bearing journal (3) via an adjoining crank web (4) to an adjacent crankshaft bearing journal (2), are installed in core block units (18), which have been formed by a division of the mould transversely to the longitudinal extension of the crankshaft and which have in turn been divided longitudinally to the longitudinal extension of the crankshaft in each case, wherein the inner cores are mounted by means of core locks or the like in regions of the subsequent crankshaft which, during engine operation, are subjected to lower mechanical loads - preferably in the contour regions of the mass balances (4a) -,
the core block units (18) are joined together to form the complete block mould (17), and
the crankshaft (1) is then cast.

12. The method according to Claim 11,
**characterised in that**
tubes are installed or injected into the inner cores at suitable points for the subsequent oil ducts.

13. The method according to Claim 11,
**characterised in that**
the oil ducts are introduced into the cast crankshaft (1) by mechanical cutting machining, preferably by drilling.

14. An block mould for producing a crankshaft (1) according to the invention hollow cast in the core block casting process, with a continuous stiffening element (9), according to one of Claims 1 to 10,
**characterised in that**
the block mould (17) is designed so that it is subdivided into several core block units (18) transversely to the longitudinal extension of the crankshaft,
**in that** the core block units (18) are designed so that they are in turn divided longitudinally to the longitudinal extension of the crankshaft in each case,
and **in that** corresponding inner cores are installed in the core block units (18) for shaping the cavity and for forming the stiffening element (9), wherein the cores are mounted in the contour regions of the mass balances (4a).

## Revendications

1. Vilebrequin creux coulé comportant des tourillons de vilebrequin (2), des tourillons de bielle (3), des flasques de manivelle (4), des équilibreurs de masse (4a), des canalisations de graissage (5) qui s'étendent respectivement de la circonférence extérieure (6) d'un tourillon de vilebrequin (2) à la circonférence extérieure (7) d'un tourillon de bielle (3) et servent à la lubrification des paliers et une cavité (8) qui s'étend sur un tourillon de vilebrequin (2), un flasque de manivelle (4) et un tourillon de bielle (3),
dans lequel le vilebrequin (1) est coulé en creux par procédé de coulée conventionnel à moule perdu, des noyaux de coulée solides s'appuient dans un moule extérieur solide, étant prévu dans la cavité (8), pour accroître la capacité de charge mécanique, notamment la résistance à la torsion et à la flexion, du vilebrequin (1) un élément de raidissement continu (9) qui s'étend en continu depuis un tourillon de bielle (3) en passant par un flasque de manivelle adjacente (4) jusqu'à un tourillon de vilebrequin voisin (2),
dans lequel des orifices dus à la technique de coulée (10) sont prévus dans les zones de contour moins fortement sollicitées mécaniquement des équilibreurs de masse (4a) et le vilebrequin (1) présente un contour extérieur autrement sensiblement fermé.

2. Vilebrequin creux coulé selon la revendication 1,
ce vilebrequin (1) étant coulé par procédé de coulée à masque.

3. Vilebrequin creux coulé selon la revendication 1,
ce vilebrequin (1) étant coulé par procédé de coulée en bloc de noyau.

4. Vilebrequin creux coulé selon une des revendications précédentes,
les orifices (10) étant pratiqués dans la zone inférieure (11) des équilibreurs de masse (4a).

5. Vilebrequin creux coulé selon une des revendications précédentes,
les orifices (10) étant réalisés de manière à empêcher la pénétration d'huile dans la cavité (8).

6. Vilebrequin creux coulé selon une des revendications précédentes,
les bords extérieurs (14) des équilibreurs de masse (4a) étant réalisés sous forme de bords de rupture (15).

7. Vilebrequin creux coulé selon une des revendications précédentes,
dans lequel plusieurs éléments de raidissement sont prévus dans la cavité (8).

8. Vilebrequin creux coulé selon la revendication 7,
dans lequel les éléments de raidissement sont réalisés sous forme d'une nervure, d'une traverse, d'un étai, d'une paroi ou similaire.

9. Vilebrequin creux coulé selon une des revendications précédentes,
dans lequel les canalisations de graissage sont réalisées sous forme de petits tubes coulés lors de la fabrication du vilebrequin.

10. Vilebrequin creux coulé selon une des revendications 1 à 8,
dans lequel les canalisations de graissage s'étendent dans un élément de raidissement (9) et sont intégrées a posteriori dans le vilebrequin coulé (1).

11. Procédé de fabrication d'un vilebrequin coulé en creux selon l'invention (1) comportant un élément de raidissement continu (9), par procédé de coulée conventionnel à moule perdu, selon une des revendications 1 à 10,
**caractérisé en ce que,**
pour la coulée du vilebrequin (1) par procédé de coulée en bloc de noyau dans des unités de bloc de noyau (18) qui ont été constituées par partage du moule transversalement à l'extension longitudinale du vilebrequin et qui ont été partagées à leur tour respectivement longitudinalement à l'extension longitudinale du vilebrequin, on intègre des noyaux internes pour le façonnage de la cavité et pour la réalisation de l'élément de raidissement (9) qui s'étend en continu depuis un tourillon de bielle (3) en passant par un flasque de manivelle adjacente (4) jusqu'à un tourillon de vilebrequin voisin (2), les noyaux internes s'appuyant par des verrous de noyau ou similaire dans des zones du futur vilebrequin qui sont moins fortement sollicitées mécaniquement lors du fonctionnement du moteur -de préférence dans les zones de contour des équilibreurs de masse (4a)-,
les unités de bloc de noyau (18) étant assemblées en un moule en bloc complet (17) et
le vilebrequin (1) étant ensuite coulé.

12. Procédé selon la revendication 11,
**caractérisé en ce que,**
pour les futures canalisations de graissage, on monte ou on glisse des petits tubes dans les noyaux internes à des endroits correspondants.

13. Procédé selon la revendication 11,
**caractérisé en ce que**
les canalisations de graissage sont creusées, de préférence alésées, dans le vilebrequin coulé (1) par usinage mécanique par enlèvement de copeaux

14. Moule en bloc pour la fabrication d'un vilebrequin (1) coulé en creux selon l'invention par procédé de coulée de bloc de noyau et comportant un élément de raidissement (9) selon une des revendications 1 à 10,
**caractérisé en ce que**
le moule en bloc (17) est réalisé subdivisé en plusieurs unités de bloc de noyau (18) transversalement à l'extension longitudinale du vilebrequin,
les unités de bloc de noyau (18) sont à leur tour réalisées partagées respectivement longitudinalement à l'extension longitudinale du vilebrequin,
des noyaux internes correspondants pour le façonnage de la cavité et la réalisation de l'élément de raidissement (9) sont intégrés dans les unités de bloc de noyau (18), l'appui du noyau se faisant dans les zones de contour des équilibreurs de masse (4a).
